# EUROPÄISCHE PATENTSCHRIFT

(11) **EP 0 819 093 B1**
(45) Veröffentlichungstag und Bekanntmachung des Hinweises auf die Patenterteilung: **09.12.1998**
(21) Anmeldenummer: 96901330.9
(22) Anmeldetag: 25.01.1996
(51) Int. Cl.: B65G 65/32, B65G 69/04, B65G 65/36, B65G 65/46

(54) **RINGFÖRDERER**
RING CONVEYOR
TRANSPORTEUR CIRCULAIRE

(30) Priorität: 07.04.1995 DE 19513137
(43) Veröffentlichungstag der Anmeldung: 21.01.1998
(73) Patentinhaber: SEEGER GMBH, 73655 Plüderhausen (DE)
(72) Erfinder: NORMANN, Klaus, Dieter, D-70736 Schmiden (DE)
(74) Vertreter: Wolf, Eckhard, Dr.-Ing.
(86) Internationale Anmeldenummer: EP9600292
(87) Internationale Veröffentlichungsnummer: WO9631421

(56) Entgegenhaltungen:
- DE-A- 3 204 924
- DE-A- 3 636 006
- US-A- 4 264 258
- US-A- 4 578 012

## Beschreibung

Die Erfindung betrifft einen Ringförderer zum Transport von Schüttgut, insbesondere Braugerste oder Grünmalz, gemäß dem Oberbegriff des Anspruchs 1 bzw. 13.

Ringförderer der oben genannten Art eignen sich insbesondere zur Verwendung in Mälzereitürmen. In derartigen Anlagen wird Gerste als Ausgangsmaterial zunächst in Weichbehältern eingeweicht und danach sogenannten Keimkästen zugeführt. Nach einer bestimmten Verweildauer in den Keimkästen keimt die geweichte Gerste und wird dadurch zu Grünmalz. Das Grünmalz wird in der nächsten Behandlungsstufe der Darre zugeführt und dort zu Darrmalz getrocknet. Aus raumökonomischen Gründen sind meist mehrere Keimkästen übereinander angeordnet, wobei der oder die Weichbehälter oberhalb und die Darre unterhalb der Keimkästen angeordnet sind. Die Zuführung der geweichten Gerste erfolgt durch Schwerkraft mittels eines in der Mitte des Ringturms angeordneten Fallrohrs, von dem aus über ein System von Umstellklappen und Zulaufrohren die einzelnen Keimkästen beschickt werden. In jedem Keimkasten ist eine Be- und Entlademaschine angeordnet, der das aus dem Zulaufrohr kommende Weichgut zugeführt wird. Die Be- und Entlademaschine läuft langsam über dem Hordenboden um und verteilt die gesamte Beschickungsmenge innerhalb eines Umlaufs. Das Entladen des Keimkastens geschieht in analoger Weise, wobei dann das gekeimte Weichgut, das sogenannte Grünmalz, über ein im unteren Bereich des Keimkastens angeordnetes Abführrohr dem Fallrohr zugeführt wird, von wo aus es zur Darre gelangt.

Ein Ringförderer der oben genannten Art ist aus der DE-A-32 04 924 bekannt. Dieser Ringförderer weist einen trogförmigen Boden auf, der mit der Be- und Entlademaschine verbunden ist und eine über der Be- und Entlademaschine angeordnete Austrittsöffnung aufweist. In dem trogförmigen Ringboden läuft berührungsfrei ein aus zwei konzentrischen Ringwänden und einzelne Kammern bildenden, radialen Zwischenwänden bestehender Mitnehmerring um. Die Umlauffrequenz des Mitnehmerrings ist wesentlich höher als die des Ringbodens bzw. der Beund Entlademaschine. Das von oben in die Kammern einfallende Weichgut wird über den Umfang gefördert, bis es zu der Austrittsöffnung gelangt und durch diese in den Bereich der Be- und Entlademaschine fällt. Aufgrund der Relativbewegung zwischen den Kammern und dem Ringboden treten über die gesamte Förderstrecke Reib- und Scherkräfte auf, die zu einer Beschädigung des empfindlichen Weichguts führen können.

Ausgehend hiervon liegt der Erfindung die Aufgabe zugrunde, einen Ringförderer der oben beschriebenen Art derart weiterzubilden, daß das aus dem Zulaufrohr kommende Gut möglichst materialschonend befördert wird.

Gemäß der vorliegenden Erfindung wird diese Aufgabe durch die Merkmale des Anspruchs 1 bzw. 13 gelöst.

Das Weichgut gelangt über das Zulaufrohr auf den Drehring, der es ohne die Einwirkung von schädlichen Reib- oder Scherkräften in den Bereich der Be- und Entlademaschine fördert, wo der Abstreifer das Gut zur Be- und Entlademaschine umleitet. Da die Aufnahmekapazität des Drehrings begrenzt ist, muß sich der Drehring mit einer wesentlich höheren Frequenz als die Be- und Entlademaschine selbst drehen, da anderenfalls das Gut über den offenen Rand nach außen fallen würde. Allerdings darf die Umlauffrequenz des Drehrings auch nicht zu hoch gewählt werden, da sonst die auf das Gut wirkende Zentrifugalkraft ebenfalls das Gut über den offenen Rand nach außen treiben würde. Die Umlauffrequenz des Drehrings ist so einzustellen, daß diesen beiden Randbedingungen Rechnung getragen wird.

Um den Einfluß der Zentrifugalkräfte zu vermindern und so die Förderkapazität des Drehrings zu erhöhen, kann der Ringboden radial nach außen ansteigend ausgebildet sein.

In einer bevorzugten Ausführungsform ist eine einen Antriebsmotor, ein mit dem Ringboden verbundenes Triebstockrad und ein auf einer Antriebswelle des Antriebsmotors angeordnetes Ritzel aufweisende Antriebseinrichtung für den Drehring vorgesehen. Das Triebstockrad weist dabei eine obere und eine untere Ringplatte auf, zwischen denen Bolzen in der Verzahnungsteilung des Ritzels eingeschweißt sind. Eine derartige Antriebseinrichtung zeichnet sich durch eine kompakte Bauform und geringe Störanfälligkeit aus. Der Antriebsmotor wird vorzugsweise elektrisch betrieben.

Um einen ruhigen Lauf des Drehrings zu gewährleisten, sollte dieser radial und axial über Stützrollen oder Gleitelemente zentriert und gestützt sein. Bevorzugt sind dabei die axialen Stützelemente an der unteren Ringplatte des Triebstockrads angeordnet und stützen sich auf einem am Gebäude fest angeordneten Axialstützring ab, während die radialen Stützelemente auf der Innenseite des Triebstockrads angeordnet sind und sich gegen einen gebäude fest angeordneten Radialstützring abstützen. Es ist aber auch möglich, daß die Stützelemente gebäudefest angeordnet sind und sich dann an der unteren Ringplatte des Triebstockrads bzw. gegen einen auf der Innenseite des Triebstockrads angeordneten Radialstützring abstützen. In beiden Fällen sollten mindestens je drei Stützrollen oder Gleitelemente gleichmäßig über den Umfang des Drehrings verteilt vorgesehen sein.

Bei einer weiteren Ausführungsform der Erfindung kann der Drehring anstatt mittels eines Triebstockrads und eines Ritzels auch durch einen Ketten- oder Friktionsantrieb angetrieben sein.

In weiterer Ausgestaltung der Erfindung ist der Abstreifer in Drehrichtung des Drehrings schräg nach außen weisend angeordnet und erstreckt sich nach außen hin auf eine Schurre oder ein Rohr, das oberhalb der Be- und Entlademaschine mündet. Dies gewährleistet eine sichere Umleitung des Weichguts zu der Be- und Entlademaschine.

Zur gleichmäßigen Verteilung des Weichguts in dem Keimkasten weist die Be- und Entlademaschine einen sich horizontal erstreckenden Schneckenförderer und vertikal angeordnete Wendeschnecken auf.

Eine besonders kompakte Bauform ergibt sich, wenn der Antriebsmotor des Drehrings an einem Rahmen auf der Beund Entlademaschine angeordnet ist.

Der Drehring und die Be- und Entlademaschine laufen bevorzugt gegensinnig um.

Die Einrichtung zum Entladen des Keimkastens ist im wesentlichen analog zu der Beladeeinrichtung ausgebildet. Hierzu weist der Ringförderer einen unterhalb des Hordenbodens angeordneten, einen einen kreisringförmigen Ringboden und eine in sich geschlossene, zum Ringboden koaxial angeordnete und an dessen äußeren Umfang im wesentlichen vertikal anschließende Außenwand aufweisenden, an seinem inneren Umfang randoffenen Drehring und einen gebäudefest im Bereich eines Abführrohrs angeordneten, in den Drehring eingreifenden und das Schüttgut in das Abführrohr umleitenden Abstreifer auf, wobei der Drehring mit einer höheren Umlauffrequenz als die Beund Entlademaschine umläuft.

Das Schüttgut ist dem unterhalb des Hordenbodens angeordneten Drehring durch eine in einem mit der Be- und Entlademaschine verbundenen und mit dieser umlaufenden Entladezylinder vorgesehene, von einer Entladeklappe gebildeten und im Bereich des radial inneren Endes einer Be- und Entladeschnecke der Be- und Entlademaschine angeordneten Entladeöffnung zuführbar. Es versteht sich, daß die Entladeklappe beim Beladen des Keimkastens geschlossen bleibt und nur bei Beginn des Entladevorgangs geöffnet wird.

Um ein vollständiges Entleeren des Keimkastens zu gewährleisten, sollte die Unterkante der Entladeöffnung mit dem Hordenboden bündig abschließen.

Im folgenden wird die Erfindung anhand der in der Zeichnung dargestellten Ausführungsbeispiele näher erläutert. Es zeigen:
- Fig. 1: eine teilgeschnittene Aufsicht auf einen Ringförderer;
- Fig. 2: eine teilgeschnittene Seitenansicht eines Ringförderers mit horizontalem Ringboden;
- Fig. 3: eine teilgeschnittene Seitenansicht eines Ringförderers mit geneigtem Ringboden und
- Fig. 4: eine geschnittene Seitenansicht eines Entladedrehrings.

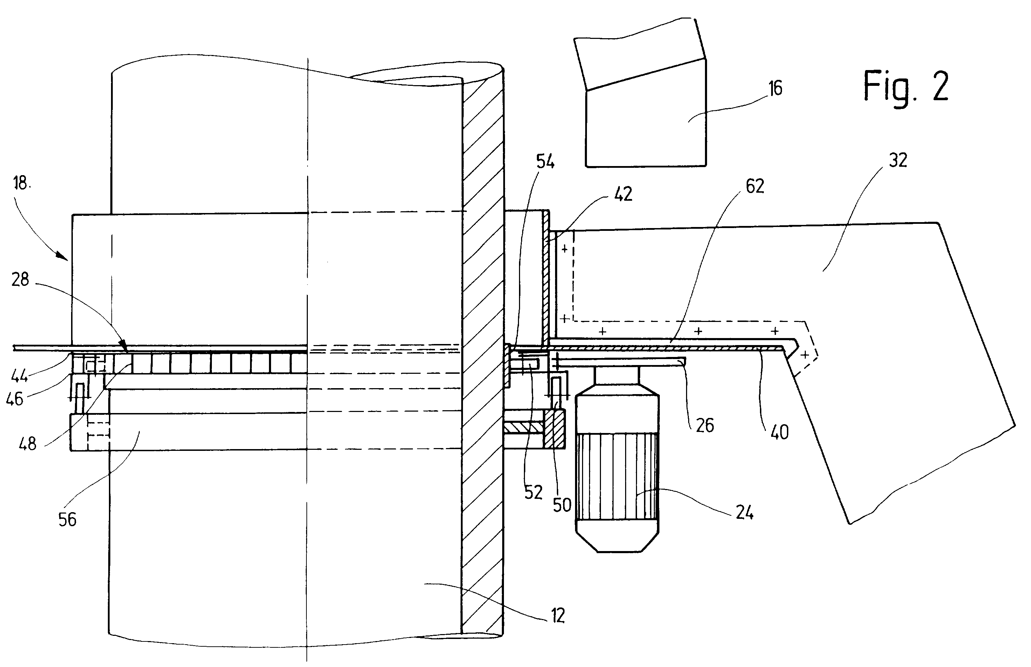

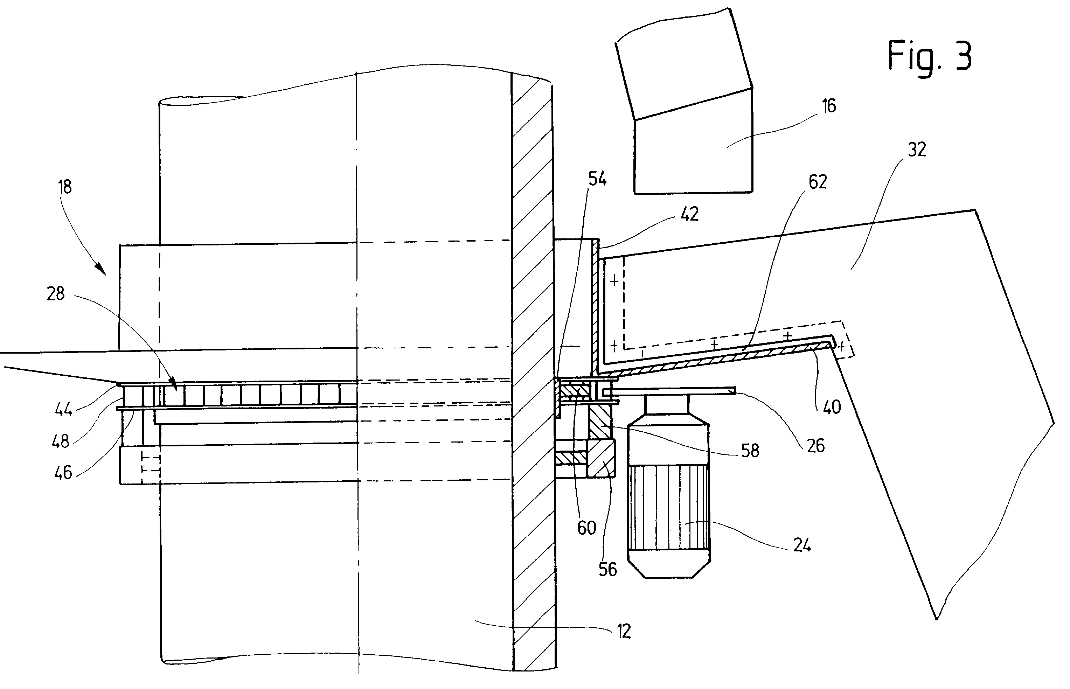

Der in der Zeichnung dargestellte, insgesamt mit 10 bezeichnete Ringförderer ist konzentrisch um die Mittelsäule 12 einer als Ringturm ausgebildeten Mälzereianlage angeordnet. Über ein im Inneren der Mittelsäule angeordnetes Fallrohr 14 und durch ein die Mittelsäule 12 durchsetzendes Zulaufrohr 16 gelangt das Schüttgut auf den Drehring 18 des Ringförderers 10. Der Drehring 18 wird mittels einer Antriebseinrichtung 20 in Richtung des Pfeils 22 angetrieben, die einen Antriebsmotor 24 (Fig. 2 und 3), ein Ritzel 26 sowie ein Triebstockrad 28 umfaßt. Das mittels des Zulaufrohrs 16 auf den Drehring 18 gelangende Schüttgut läuft mit diesem um, bis es in den Bereich eines fest an einer Be- und Entlademaschine 30 angeordneten Abstreifers 32 gelangt. Der Abstreifer 32 lenkt das Schüttgut von dem Drehring 18 radial nach außen ab, so daß es in den radial inneren Bereich einer Be- und Entladeschnecke 34 der Be- und Entlademaschine 30 fällt. Die Be- und Entladeschnecke 34 dreht sich beim Beladen des Keimkastens derart, daß das Schüttgut radial nach außen getragen wird und sich gleichmäßig über den Hordenboden des Keimkastens verteilt. Die Be- und Entlademaschine 30 läuft langsam in Richtung des Pfeils 36, also entgegen dem Drehsinne des Drehrings 18, über dem Hordenboden um, wobei die Umlaufzeit mit ein bis zwei Stunden derart bemessen ist, daß der Keimkasten während eines einzigen Umlaufs der Be- und Entlademaschine 30 be- bzw. entladen wird. Die Be- und Entlademaschine 30 weist in Umlaufrichtung gesehen der Be- und Entladeschnecke nachgeordnet mehrere Wendeschnecken 38 auf, die für eine Gleichverteilung und Auflockerung des Schüttguts sorgen.

Bezugnehmend auf die Fig. 2 und 3 werden im folgenden der Drehring 18 und seine Lagerung näher erläutert. Der Drehring 18 weist einen kreisringförmigen horizontalen (Fig. 2) bzw. radial nach außen ansteigenden (Fig. 3) Ringboden 40 und eine zu diesem koaxial angeordnete, an dessen inneren Umfang vertikal anschließende Innenwand 42 auf. Im Bereich des inneren Umfangs des Drehrings 18 ist an dessen Unterseite das Triebstockrad 28 befestigt, welches obere und untere Ringplatten 44, 46 und zwischen diesen entsprechend der Verzahnungsteilung des Ritzels 26 eingeschweißte Bolzen 48 aufweist. Das Triebstockrad 28 trägt nicht nur den Drehring 18 und sorgt für dessen Antrieb, sondern dient gleichzeitig zu dessen Lagerung und Zentrierung bezüglich der Mittelsäule 12 des Ringturms. Hierfür sind axiale und radiale Stützelemente in der Form von Stützrollen (Fig. 2) bzw. Gleitelementen (Fig. 3) vorgesehen.

Bei dem Ausführungsbeispiel der Fig. 2 ist der Drehring 18 mittels Stützrollen 50, 52 axial und radial gelagert, wobei die Radialstützrollen 52 auf der Innenseite des Triebstockrads 28 und die Axialstützrollen 50 auf der Unterseite der unteren Ringplatte 46 des Triebstockrads 28 angeordnet sind. Die Radialstützrollen 52 laufen auf der Außenfläche eines die Mittelsäule 12 umfassenden Zentrierrings 54 und die Axialstützrollen 50 laufen auf der Oberseite eines konzentrisch zur Mittelsäule 12 angeordneten Stützrings 56. Der Drehring 18 des in der Fig. 3 dargestellten Ausführungsbeispiels ist in analoger Weise durch axiale und radiale Gleitelemente 58, 60 abgestützt und zentriert. Um einen ruhigen Lauf zu gewährleisten, sind jeweils mindestens drei axiale und radiale Stützrollen 50, 52 bzw. Gleitelemente 58, 60 gleichmäßig über den Umfang des Drehrings verteilt vorgesehen.

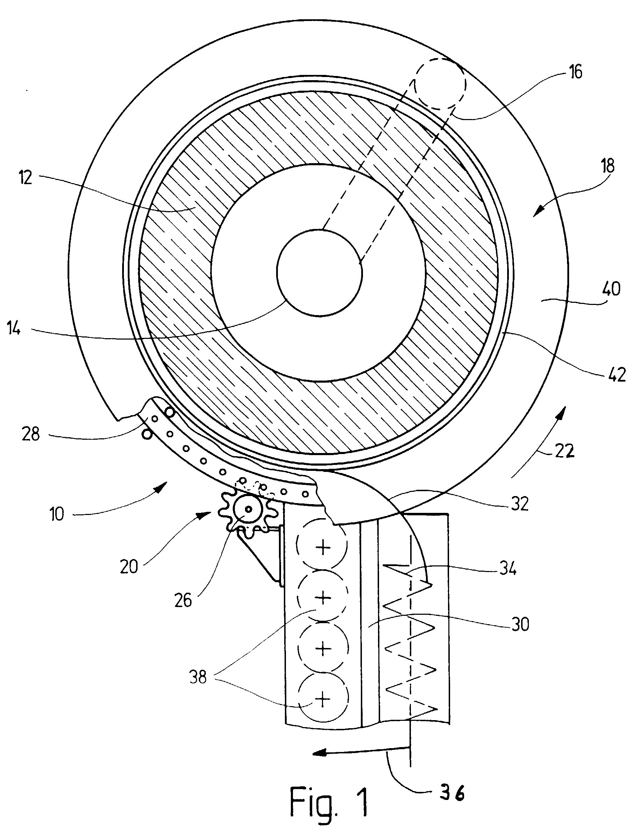

Der das Schüttgut vom Drehring 18 zur Be- und Entlademaschine 30 umleitende Abstreifer 32 kann, wie in der Fig. 1 dargestellt, gebogen oder auch gerade ausgebildet sein, sollte aber in jedem Fall in Drehrichtung des Drehrings gesehen schräg nach außen weisend angeordnet sein. Des weiteren kann sich der Abstreifer 32 nach außen hin auf eine nicht näher dargestellte Schurre oder ein Rohr erstrecken, das oberhalb des radial inneren Bereiches der Be- und Entladeschnecke 34 mündet. Um ohne Verschleiß und übermäßige Geräuschentwicklung, aber dennoch an dem Ringboden 40 und der Innenwand 42 des Drehrings 18 anliegend das Schüttgut umzuleiten, ist an den an den Ringboden und die Innenwand grenzenden Kanten des Abstreifers 32 ein elastisches Dichtelement 62, z.B. eine Gummilippe, vorgesehen.

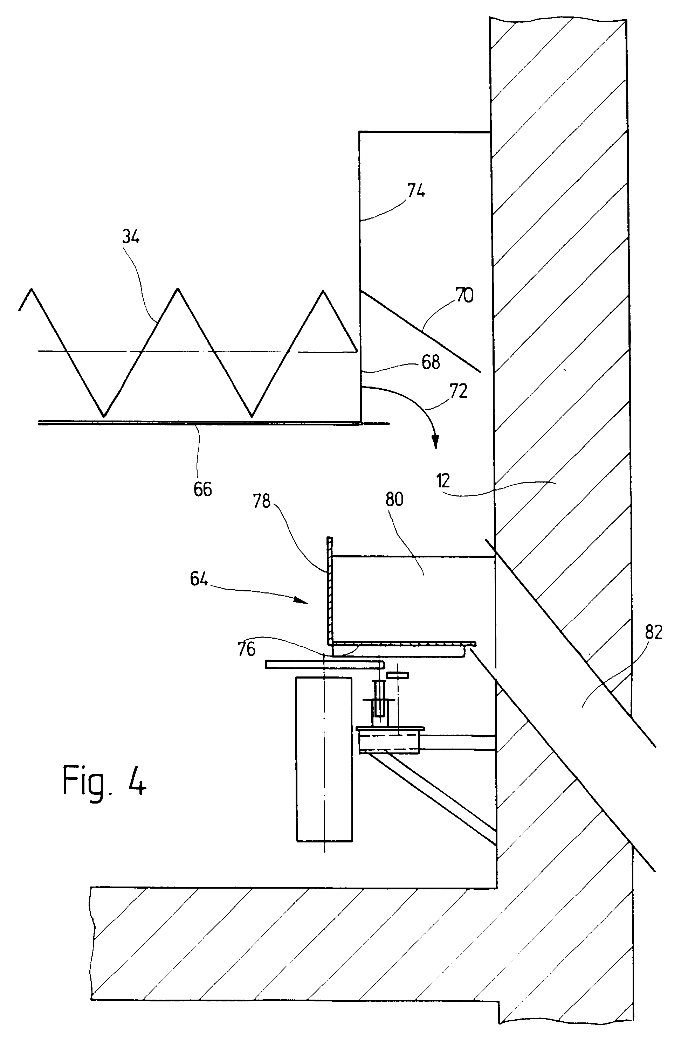

Zum Entladen des Keimkastens ist ein weiterer Drehring 64 in einem Bereich unterhalb des Hordenbodens 66 angeordnet (Fig. 4). Das Schüttgut wird beim Entladen des Keimkastens mittels der Be- und Entladeschnecke 34 radial nach innen gefördert und gelangt durch eine beim Entladen eine Entladeöffnung 68 freigebende Entladeklappe 70 gemäß dem Pfeil 72 auf den weiteren Drehring 64. Die Entladeklappe 70 ist Teil eines fest mit der Be- und Entlademaschine 30 verbundenen und mit dieser umlaufenden Entladezylinders 74, der den Keimkasten nach innen radial begrenzt.

Der weitere Drehring 64 ist bezüglich der Ausgestaltung seines Antriebs und seiner Lagerung analog dem Beladedrehring 18 aufgebaut, auf dessen Beschreibung somit Bezug genommen werden kann, mit dem Unterschied, daß der Drehring 64 in seinem radial inneren Bereich randoffen ausgebildet ist und eine an den Ringboden 76 radial außen anschließende Außenwand 78 aufweist. Das Schüttgut wird mittels eines in den Drehring 64 eingreifenden und fest an der Mittelsäule 12 angeordneten Abstreifers 80 in das die Mittelsäule durchstoßende Abführrohr 82 umgelenkt und dem Fallrohr 14 zugeführt. Das Schüttgut wird sodann mittels einer weiteren, im unteren Bereich des Ringturms angeordneten Fördereinrichtung der Darre zur weiteren Behandlung zugeführt.

## Patentansprüche

1. Ringförderer zum Transport von Schüttgut, insbesondere Braugerste oder Grünmalz, von einem ortsfest im Inneren eines als Ringturm ausgebildeten Gebäudes angeordneten, über dem Ringförderer (10) mündenden Zulaufrohr (16) in den Bereich einer sich radial erstreckenden und über einem Hordenboden (66) umlaufenden Be- und Entlademaschine (30), des Ringförderers, wobei der Ringförderer (10) einen Drehring (18) aufweist, mit einem kreisringförmigen Ringboden (40) und einer in sich geschlossenen, zum Ringboden (40) koaxial angeordneten und an dessen inneren Umfang im wesentlichen vertikal anschließende Innenwand (42), **dadurch gekennzeichnet**, daß der Drehring an seinem äußeren Umfang randoffen ist, daß ein fest an der Beund Entlademaschine (30) angeordneter, in den Drehring (18) eingreifender und das Schüttgut zu der Be- und Entlademaschine (30) umleitender Abstreifer (32) vorgesehen ist, und daß der Drehring (18) mit einer höheren Umlauffrequenz als die Be- und Entlademaschine (30) umläuft.

2. Ringförderer nach Anspruch 1, **dadurch gekennzeichnet,** daß der Ringboden (40) radial nach außen ansteigend ausgebildet ist.

3. Ringförderer nach Anspruch 1 oder 2, **dadurch gekennzeichnet**, daß eine einen Antriebsmotor (24), ein mit dem Ringboden (40) verbundenes Triebstockrad (28) und ein auf einer Antriebswelle des Antriebsmotors (24) angeordnetes Ritzel (26) aufweisende Antriebseinrichtung (20) für den Drehring (18) vorgesehen ist.

4. Ringförderer nach Anspruch 3, **dadurch gekennzeichnet**, daß das Triebstockrad (28) eine obere und eine untere Ringplatte (44,46) aufweist, zwischen denen Bolzen (48) in der Verzahnungsteilung des Ritzels (26) eingeschweißt sind.

5. Ringförderer nach einem der Ansprüche 1 bis 4, **dadurch gekennzeichnet**, daß der Drehring (18) axial und radial über Stützrollen (50,52) oder Gleitelemente (58,60) zentriert und gestützt ist.

6. Ringförderer nach Anspruch 5, **dadurch gekennzeichnet**, daß die axialen Stützelemente (50,58) an der unteren Ringplatte (46) des Triebstockrads (28) angeordnet sind und sich auf einem gebäudefest angeordneten Stützring (56) abstützen, und daß die radialen Stützelemente (52,60) auf der Innenseite des Triebstockrads (28) angeordnet sind und sich gegen einen gebäude fest angeordneten Zentrierring (54) abstützen.

7. Ringförderer nach Anspruch 5 oder 6, **dadurch gekennzeichnet**, daß mindestens je drei Stützrollen (50,52) oder Gleitelemente (58,60) gleichmäßig über den Umfang des Drehrings (18) verteilt vorgesehen sind.

8. Ringförderer nach Anspruch 1 oder 2, **dadurch gekennzeichnet**, daß der Drehring (18) durch einen Ketten- oder Friktionsantrieb angetrieben ist.

9. Ringförderer nach einem der Ansprüche 1 bis 8, **dadurch gekennzeichnet,** daß der Abstreifer (32) in Drehrichtung des Drehrings (18) schräg nach außen weisend angeordnet ist und sich nach außen hin auf eine Schurre oder ein Rohr erstreckt, das oberhalb der Be- und Entlademaschine (30) mündet.

10. Ringförderer nach einem der Ansprüche 1 bis 9, **dadurch gekennzeichnet,** daß die Be- und Entlademaschine (30) einen sich horizontal erstreckenden Schneckenförderer (34) und vertikal angeordnete Wendeschnecken (38) aufweist.

11. Ringförderer nach einem der Ansprüche 3 bis 10, **dadurch gekennzeichnet,** daß der Antriebsmotor (24) des Drehrings (18) an einem Rahmen auf der Be- und Entlademaschine (30) angeordnet ist.

12. Ringförderer nach einem der Ansprüche 1 bis 11, **dadurch gekennzeichnet**, daß der Drehring (18) und die Be- und Entlademaschine (30) gegensinnig umlaufen.

13. Ringförderer zum Transport von Schüttgut, insbesondere Braugerste oder Grünmalz, von einer über einem Hordenboden (66) eines als Ringturm ausgebildeten Gebäudes umlaufenden und das Schüttgut dem Ringförderer zuführenden Be- und Entlademaschine (30) des Ringförderers in den Bereich eines in einem in der Turmmitte angeordneten Fallrohr (14) mündenden Abführrohrs (82), wobei der Ringförderer einen unterhalb des Hordenbodens (66) anordenbaren, einen kreisringförmigen Ringboden (76) und eine in sich geschlossene, zum Ringboden koaxial angeordnete und an dessen äußeren Umfang im wesentlichen vertikal anschließende Außenwand (78) aufweisenden Drehring (64) aufweist dadurch gekennzeichnet, daß der Drehring (64) an seinem inneren Umfang randoffen ist und der Ringförderer einen gebäudefest im Bereich des Abführrohrs (82) angeordneten, in den Drehring (64) eingreifenden und das Schüttgut in das Abführrohr (82) umleitenden Abstreifer (80) besitzt, wobei der Drehring (64) mit einer höheren Umlauffrequenz als die Be- und Entlademaschine (30) umläuft.

14. Ringförderer nach Anspruch 13 in Verbindung mit einem Hordenboden (66), **dadurch gekennzeichnet**, daß das Schüttgut dem unterhalb des Hordenbodens (66) angeordneten Drehring (64) durch eine in einem mit der Be- und Entlademaschine (30) verbundenen und mit dieser umlaufenden Entladezylinder (74) vorgesehene, von einer Entladeklappe (70) gebildeten und im Bereich des radial inneren Endes einer Be- und Entladeschnecke (34) der Be-und Entlademaschine (30) angeordnete Entladeöffnung (68) zuführbar ist.

15. Ringförderer nach Anspruch 14, **dadurch gekennzeichnet**, daß die Unterkante der Entladeöffnung (68) mit dem Hordenboden (66) bündig ist.

## Claims

1. A ring conveyor for conveying bulk material, specially brewing barley or long malt, from a feed pipe (16) disposed stationary inside a building in the form of an annular tower and opening above the ring conveyor (10) into the region of a radial charging and discharging machine (30) of the ring conveyor circulating above a kiln floor (66), wherein the ring conveyor (10) comprises a rotary ring (18) which has an annular base (40) and an endless inner wall (42) which is disposed coaxially with respect to the annular base (40) and joins the inner circumference of the annular base generally vertically, **characterized in that** the rotary ring is open-edged at its outer periphery, that there is provided a doctor blade (32) which is connected to the charging and discharging machine (30), which engages into the rotary ring (18), and which diverts the bulk material to the charging and discharging machine (30), and that the rotary ring (18) rotates at a higher cycle frequency than the charging and discharging machine (30).

2. The ring conveyor of claim 1, **characterized in that** the annular base (40) is formed to slope radially outwards.

3. The ring conveyor of claim 1 or 2, **characterized in that** there is provided a driving device for the rotary ring (18), which driving device comprises a drive motor (24), a pin wheel gear (28) which is connected to the annular base (40), and a sprocket (26) which is disposed on a drive shaft of the drive motor (24).

4. The ring conveyor of claim 3, **characterized in that** the pin wheel gear (28) has an upper and a lower ring plate (44,46), inbetween which plates bolts (48) spaced corresponding to the tooth spacing of the sprocket (26) are welded.

5. The ring conveyor of one of claims 1 to 4, **characterized in that** the rotary ring (18) is centered and supported axially and radially by means of support rollers (50,52) or sliding members (58,60).

6. The ring conveyor of claim 5, **characterized in that** the axial support members (50,58) are disposed at the lower ring plate (46) of the pin wheel gear (28) and are themselves supported by a support ring (56) which is disposed fixed to the building, and that the radial support members (52,60) are disposed at the inner side of the pin wheel gear (28) and are supported by a centering ring (54) which is disposed fixed to the building.

7. The ring conveyor of claim 5 or 6, **characterized in that** there are provided at least three support rollers (50,52) or sliding members (58,60) each, which are disposed regularly spaced over the circumference of the rotary ring (18).

8. The ring conveyor of claim 1 or 2, **characterized in that** the rotary ring (18) is driven by chain or friction drive means.

9. The ring conveyor of one of claims 1 to 8, **characterized in that** the doctor blade (32) is disposed directing outwardly at an angle and extending outwardly toward a chute or pipe which opens above the charging and discharging machine (30).

10. The ring conveyor of one of claims 1 to 9, **characterized in that** the charging and discharging machine (30) comprises a screw conveyor (34) extending horizontally and circulation screws (38) positioned vertically.

11. The ring conveyor of one of claims 3 to 10, **characterized in that** the drive motor (24) of the rotary ring (18) is disposed on a frame of the charging and discharging machine (30).

12. The ring conveyor of one of claims 1 to 11, **characterized in that** the rotary ring (18) and the charging and discharging machine (30) rotate in opposite directions.

13. A ring conveyor for conveying bulk material, especially brewing barley or long malt, from a charging and discharging machine (30) of the ring conveyor, which circulates above a kiln floor (66) of a building in the form of an annular tower and which supplies the bulk material to the ring conveyor, to the vicinity of a discharge pipe (82) which opens into a downpipe (14) disposed in the center of the tower, wherein the ring conveyor comprises a rotary ring (64), which is disposed below the kiln floor (66), and which has an annular ring floor (76) and an endless outer wall (78) which is disposed coaxially with respect to the ring floor and which joins the outer circumference of the ring floor generally vertically, **characterized in that** the rotary ring (64) is open-edged at its inner circumference and that the ring conveyor comprises a doctor blade (80) which is disposed fixed to the building in the region of a discharge pipe (82) and which extends into the rotary ring (64) and diverts the bulk material into the discharge pipe (82), the rotary ring rotating at a higher cycle frequency than the charging and discharging machine (30).

14. The ring conveyor of claim 13 in connection with a kiln floor (66), **characterized in that** the bulk material is supplied to the rotary ring (64) which is disposed below the kiln floor (66) by means of a discharge opening (68) which is provided in a discharge cylinder (74) which is connected to the charging and discharging machine (30) and rotates together with this and which is formed by a discharge flap (70) and is positioned in the region of the radially inner end of a charging and discharging screw (34) of the charging and discharging machine (30).

15. The ring conveyor of claim 14, **characterized in that** the lower edge of the discharge opening (68) is disposed flush with respect to the kiln floor (66).

## Revendications

1. Transporteur circulaire pour le transport de matière en vrac, en particulier d'orge de brasserie ou de malt vert, à partir d'un tuyau d'arrivée (16) disposé fixe à l'intérieur d'un bâtiment réalisé sous la forme d'une tour circulaire, et débouchant au-dessus du transporteur circulaire (10), jusque dans la zone d'une machine de chargement et de déchargement (30) du transporteur annulaire, machine qui s'étend radialement et circule au-dessus d'un fond perforé (66), le transporteur circulaire (10) comportant un anneau tournant (18) possédant un fond annulaire (40), ayant la forme d'anneau de cercle, et une paroi intérieure (42) fermée en elle-même, disposée coaxialement par rapport au fond annulaire (40) et se raccordant pour l'essentiel verticalement à la périphérie intérieure de ce fond, caractérisé en ce que l'anneau tournant est pourvu d'un bord ouvert à sa périphérie extérieure, qu'un racleur (32), disposé fixe sur la machine de chargement et de déchargement (30), est engagé dans l'anneau tournant (18) et dévie le produit en vrac vers la machine de chargement et de déchargement (30), et que l'anneau tournant (18) circule à une fréquence de rotation plus élevée que la machine de chargement et déchargement (30).

2. Transporteur circulaire selon la revendication 1, caractérisé en ce que le fond annulaire (40) est réalisé avec une pente montante dans le sens radialement vers l'extérieur.

3. Transporteur circulaire selon la revendication 1 ou 2, caractérisé en ce que l'anneau tournant (18) est mû par un dispositif d'entraînement (20) comprenant un moteur d'entraînement (24), une roue motrice (28) reliée au fond annulaire (40) et un pignon (26) calé sur l'arbre de sortie du moteur (24).

4. Transporteur circulaire selon la revendication 3, caractérisé en ce que la roue motrice (28) comporte une plaque annulaire supérieure (44) et une plaque annulaire inférieure (46), entre lesquelles sont soudées des broches (48) dans une disposition correspondant au pas de la denture du pignon (26).

5. Transporteur circulaire selon une des revendications 1 à 4, caractérisé en ce que l'anneau tournant (18) est centré et appuyé axialement et radialement par des galets d'appui (50, 52) ou des éléments de glissement (58, 60).

6. Transporteur circulaire selon la revendication 5, caractérisé en ce que les éléments d'appui axial (50, 58) sont disposés sur la plaque annulaire inférieure (46) de la roue motrice (28) et prennent appui sur un anneau d'appui (56) disposé fixe par rapport au bâtiment, et que les éléments d'appui radial (52, 60) sont disposés sur le côté intérieur de la roue motrice (28) et prennent appui sur un anneau de centrage (54) disposé fixe par rapport au bâtiment.

7. Transporteur circulaire selon la revendication 5 ou 6, caractérisé en ce qu'au moins trois galets d'appui (50, 52) ou éléments de glissement (58, 60) sont uniformément répartis sur le pourtour de l'anneau tournant (18).

8. Transporteur circulaire selon la revendication 1 ou 2, caractérisé en ce que l'anneau tournant (18) est mû par l'intermédiaire d'une transmission à chaîne ou par friction.

9. Transporteur circulaire selon une des revendications 1 à 8, caractérisé en ce que le racleur (32) est dirigé obliquement vers l'extérieur dans le sens de rotation de l'anneau tournant (18) et se prolonge vers l'extérieur jusqu'au-dessus d'une goulotte ou d'un tuyau qui aboutit au-dessus de la machine de chargement et de déchargement (30).

10. Transporteur circulaire selon une des revendications 1 à 9, caractérisé en ce que la machine de chargement et de déchargement (30) comprend un transporteur à vis sans fin (34) qui s'étend horizontalement et des vis sans fin de retournement (38) agencées verticalement.

11. Transporteur circulaire selon une des revendications 3 à 10, caractérisé en ce que le moteur d'entraînement (24) de l'anneau tournant (18) est installé sur un bâti porté par la machine de chargement et de déchargement (30).

12. Transporteur circulaire selon une des revendications 1 à 11, caractérisé en ce que l'anneau tournant (18) et la machine de chargement et de déchargement (30) circulent dans des sens contraires.

13. Transporteur circulaire pour le transport de matière en vrac, en particulier d'orge de brasserie ou de malt vert, à partir d'une machine de chargement et de déchargement (30) du transporteur circulaire, machine qui circule au-dessus d'un fond perforé (66) d'un bâtiment réalisé sous la forme d'une tour circulaire, et qui amène le produit en vrac au transporteur circulaire, jusque dans la zone d'un tuyau d'évacuation (82) débouchant dans un tuyau de chute (14) placé au centre de la tour, le transporteur circulaire comportant un anneau tournant (64), pouvant être installé au-dessous du fond perforé (66) et possédant un fond annulaire (76) en forme d'anneau de cercle et une paroi extérieure (78) fermée en elle-même, disposée coaxialement par rapport au fond annulaire et se raccordant sensiblement en direction verticale à la périphérie extérieure de ce fond, caractérisé en ce que l'anneau tournant (64) est réalisé avec un bord ouvert à sa périphérie intérieure et le transporteur circulaire possède un racleur (80) disposé fixe par rapport au bâtiment dans la zone du tuyau d'évacuation (82), racleur qui est engagé dans l'anneau tournant (64) et dévie le produit en vrac dans le tuyau d'évacuation (82), l'anneau tournant (64) circulant à une fréquence de rotation plus élevée que la machine de chargement et de déchargement (30).

14. Transporteur circulaire selon la revendication 13, en combinaison avec un fond perforé (66), caractérisé en ce que le produit en vrac peut être amené à l'anneau tournant (64), installé au-dessous du fond perforé (66), à travers une ouverture de déchargement (68) prévue dans un cylindre de déchargement (74) relié à la machine de chargement et de déchargement (30) et circulant avec elle, ouverture qui peut être dégagée par un clapet de déchargement (70) et est disposée dans la zone de l'extrémité radialement intérieure d'une vis sans fin de chargement et de déchargement (34) de la machine de chargement et de déchargement (30).

15. Transporteur circulaire selon la revendication 14, caractérisé en ce que le bord inférieur de l'ouverture de déchargement (68) affleure le fond perforé (66).
